(19) Europäisches Patentamt
European Patent Office
Office européen des brevets

(11) **EP 2 009 820 B1**

(12) **EUROPEAN PATENT SPECIFICATION**

(45) Date of publication and mention
of the grant of the patent:
**20.10.2010 Bulletin 2010/42**

(51) Int Cl.:
*H04J 3/06* (2006.01)          *H04L 12/64* (2006.01)

(21) Application number: **07111282.5**

(22) Date of filing: **28.06.2007**

(54) **Method and receiver for determining a jitter buffer level**

Verfahren und Empfänger zur Bestimmung eines Jitterspeicherniveaus

Procédé et récepteur pour déterminer le niveau d'un tampon de gigue

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**31.12.2008 Bulletin 2009/01**

(73) Proprietors:
• **Global IP Solutions (GIPS) AB
118 27 Stockholm (SE)**
• **Global IP Solutions, Inc.
San Francisco, CA 94107 (US)**

(72) Inventor: **Fahlberg Lundin, Henrik
191 39, Sollentuna (SE)**

(74) Representative: **Ahrengart, Kenneth
Awapatent AB
P.O. Box 45086
104 30 Stockholm (SE)**

(56) References cited:
WO-A-01/88763          WO-A1-00/42749
US-A- 5 623 483        US-A- 6 072 809
US-A1- 2001 019 537    US-A1- 2004 008 628
US-B1- 6 259 677       US-B1- 7 110 422

## Description

<u>Technical Field of the Invention</u>

The present invention generally relates to reception of data packets with digitized signal samples from a packet data network, and more specifically to determining a target packet level of a jitter buffer adapted to receive packets with delay jitter from the network.

<u>Background of the Invention</u>

In packet switched networks, such as the Internet, data packets transferred by the network are subject to varying delays due to network load when transferring a packet, network path for a transferred packet, and other network conditions. Thus, data packets that are produced by a transmitter at a constant rate arrive at a receiver with variable delays. The varying delay of a data packet is mainly due to the delay inflicted by the packet network and is often referred to as jitter. The severity of the jitter can vary significantly depending on network type and current conditions; the variance of the packet delay can change with several orders of magnitude from one network type to another.

In order to reproduce an audio stream that is true to the original, a decoder must be provided with data packets at the same constant rate with which they were sent. Therefore, a device called a jitter buffer is commonly introduced in the receiver. The jitter buffer must de-jitter the incoming stream of packets and provide a constant flow of data to the decoder. This is done by holding the packets in a buffer, thus introducing a delay at the receiver, so that future packets that are subject to larger delays will have arrived before their respective time-of-use. In other words, packets are needed in the jitter buffer to prevent the buffer from underflowing, or at least minimizing the time during which the buffer is in a state of underflow. A long delay of a packet may not only result in that the buffer becomes empty, but also that the buffer may be empty for an unacceptable long time. If the buffer becomes empty, continued playback of the received signal is no longer possible and the delayed packet will be treated as a lost packet. However, a high buffer level will introduce a long delay at the receiver which is detrimental in itself for two-way human communication.

There is an inevitable trade-off in jitter buffers between buffer delay on the one hand and packet losses due to late arrivals on the other. Aiming for a low buffer level, and thus a short delay, results in a larger portion of packets being discarded since they will arrive too late for continuous playback, while a high buffer level and a long delay will be very annoying for two-way human communication.

In the prior art, attempts are often made to estimate and control an end-to-end delay, i.e. the total delay from the sound source, e.g. a microphone, to the destination, e.g. a loudspeaker. This total delay is hard to estimate and requires synchronized clocks on transmitting and receiving ends. In addition to requiring synchronized clocks, this solution suffers from the problem of sample clock drift.

The present invention addresses the problem of how to determine a jitter buffer level which provides a suitable trade-off between buffer delay and packet losses.

US 6 072 809 discloses a method for dynamically controlling the playback delay of network multimedia streams based on maintaining and updating statistical trends of network delay. The total end-to-end delay (TED), representing the sum of network delay and playback delay, of a data stream is used for constructing a packet delay distribution curve. Future TED values are then predicted and the information is used for adjusting the playback delay by either dropping packets or adding delay at the receiver.

US 6 259 677 discloses clock synchronization and dynamic jitter management for voice over IP. A packet delay is disclosed as consisting of a fixed delay and a variable delay. Jitter values are computed constrained to a time-varying envelope of packet arrival times bounded below by the fixed delay. An adaptive playout delay estimator adapts packet playout delay to reduce latency as much as possible without causing jitter underflow.

US 7 110 422 discloses managing of voice call quality over packet networks by providing an optimal de-jitter buffer depth. Different policies are described involving voice path delay and packet loss probability. A policy is described as minimizing either one of the parameters voice path delay and packet loss probability, while providing a fixed constraint on the other parameter, or as finding an equilibrium between the two parameters that provides for the best mean opinion score, an objective measure of voice quality.

WO00/42749 shows the measurement of packet interarrival times for the purpose of estimating a nominal buffer fill level. Depending on the measured packet interarrival times, the nominal buffer fill level may be adjusted.

<u>Summary of the Invention</u>

An object of the present invention is to determine a jitter buffer level which provides a suitable trade-off between buffer delay and packet losses. This object is achieved by a method as defined in independent claim 1 and a receiver as defined in independent claim 14.

The basic idea of the invention is to make a jitter buffer adaptive to current network conditions, i.e., the nature and magnitude of the jitter observed by the receiver, by collecting statistical measures that describe these conditions.

According to the invention, a probability mass function is continuously updated with inter-arrival times between received packets. With the updated probability mass function, an expected duration of an empty jitter buffer is defined.

Thus, a desired buffer level is not determined with regard to the probability of packet losses as such, but with regard to the effect of packet losses in terms of duration of the discontinued playback of the true signal. This effect is derived from statistical measures of the current and recent network conditions as perceived by the receiving side. The current and recent network conditions are reflected by the updated probability mass function. Using the probability mass function, the risk of "underflowing" the buffer can be derived, i.e. the probability that all packets at a certain buffer level will be decoded before the next packet arrives in the buffer. Moreover, for a certain buffer level, the expected duration of an empty buffer is given by the probability mass function. This "outage time" is approximately equal to the amount of synthetic data, or packet loss concealment data, that must be generated and played when the buffer becomes empty. Thus, an advantage of the invention is that a suitable buffer level is determined based on continuous statistical measures of the network conditions.

The invention minimizes a cost function, which function includes a jitter buffer delay and an expected duration of an empty buffer. By applying a weighting factor to the cost function so as to weight the jitter buffer delay in relation to the expected duration of an empty buffer, the invention may consider the type of traffic carried by the data packets when determining the desired buffer level. This is advantageous since different kind of data traffic may have different requirements with regard to the trade-off between delay caused by the buffer and duration of any discontinued playback of data.

Preferably, the actual current buffer level is compared with the determined suitable, or target, buffer level. If there is a difference, signaling is made that the length of the decoded signal sample information should be modified, i.e. lengthened or shortened. Thus, the current buffer level is indirectly controlled in the direction of the determined target buffer level.

Further features of the invention, as well as advantages thereof, will become more readily apparent from the following detailed description. As is understood, various modifications, alterations and different combinations of features coming within the scope of the invention as defined by the appended claims will become apparent to those skilled in the art when studying the general teaching set forth herein and the following detailed description.

Brief Description of the Drawings

Exemplifying embodiments of the present invention will be described in greater detail with reference to the accompanying drawings, in which:

Fig. 1 schematically shows an exemplified system in which an embodiment of the inventive receiver is included and configured to operate;

Fig. 2 is a flow chart with the operation of the control logic means of the receiver shown in Fig. 1 in accordance with an embodiment of the invention; and

Fig. 3 shows a filter for filtering a current buffer level of the jitter buffer in Fig. 1 in accordance with an embodiment of the invention.

Detailed Description of the Invention

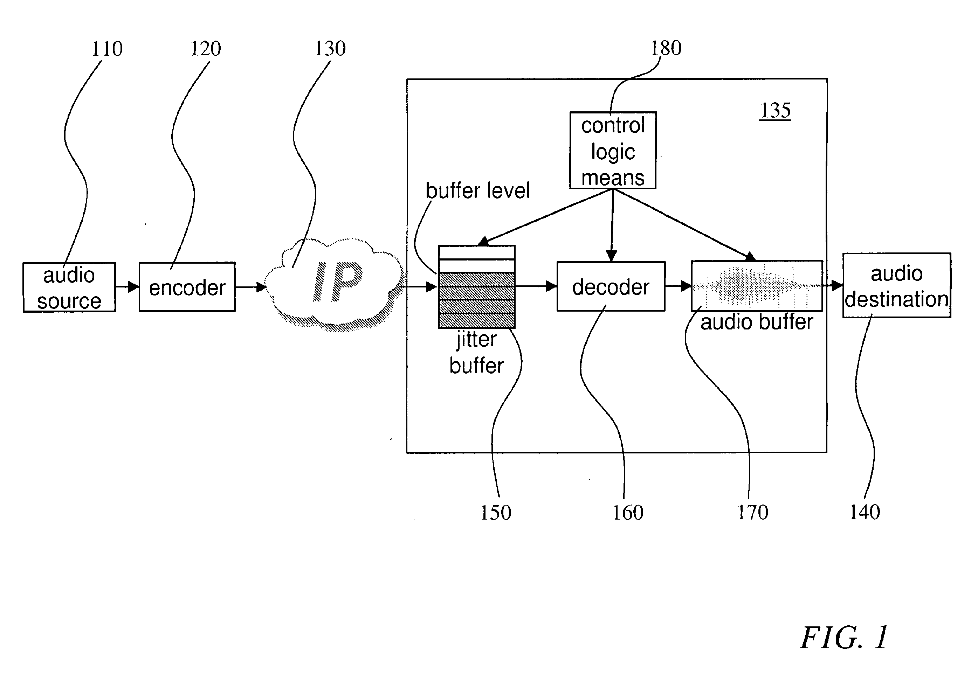

With reference to Fig.1, an exemplified system is disclosed in which an embodiment of the inventive receiver is included and configured to operate. The transmitting end includes an audio source 110 and an encoder 120 for encoding and packetizing the audio for transmission as packet data over a packet data network 130, here indicated as an Internet Protocol network. The receiving end includes a receiver 135 and an audio destination 140. The receiver 135 includes a jitter buffer 150, a decoder 160, an audio buffer 170 and control logic means 180. The control logic means 180 exchange signaling information with the jitter buffer and is also responsible for signaling to the decoder 160 and the audio buffer 170. The present invention is concerned with the jitter buffer 150 and the control logic means 180 of the receiver 135. The decoder 160 is at least in part controlled by the control logic means, as will be described below. However, the decoder 160 itself and its operations does not form part of the present invention, but is described in EP 1 243 090.

The control logic means 180 are implemented by suitable state of the art hardware circuitry, including processing circuitry and interfacing circuitry, adapted to execute program instructions stored in a memory of the receiver 135 for causing the control logic means to operate in accordance with the present invention. The design of these program instructions will be appreciated by a person skilled in the art of programming after having studied the present invention disclosure.

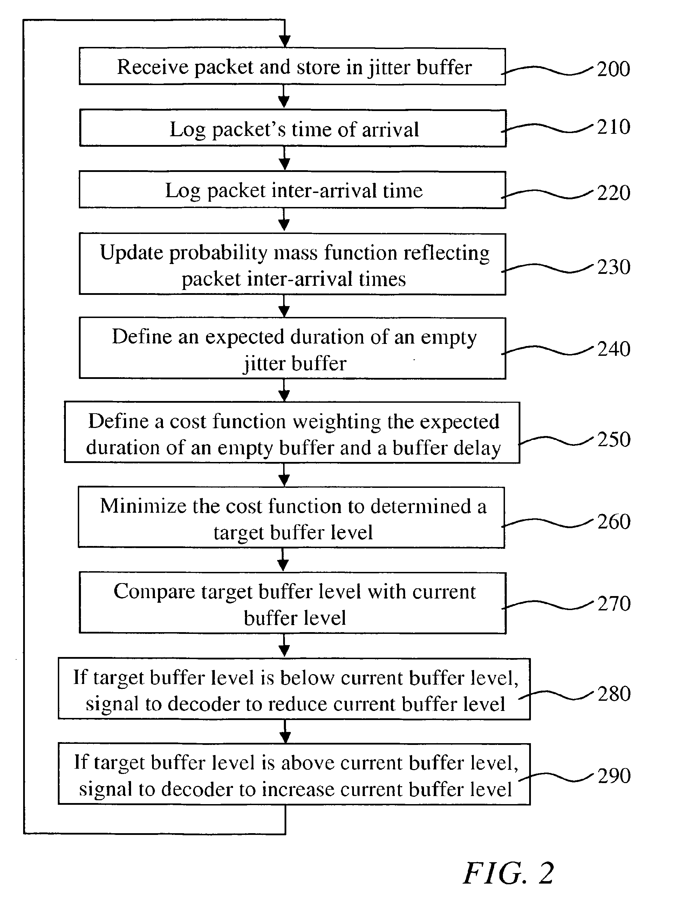

With reference to the flow chart in Fig. 2, the operation of the receiver 135 in Fig. 1, and in particular the control logic means 180, in accordance with the present invention will now be described.

In step 200 the receiver 135 at the receiving end receives data packets with digitized signal samples from the packet data network 130. Received packets are inserted in the jitter buffer 150. In step 210 the control logic means 180 logs the arrival time of a received packet in order to also log, in step 220, a packet inter-arrival time defined as the time between receipt of the current packet and the previous packet. Alternatively, not every packet's arrival time is logged, but the inter-arrival time between two consecutive packets are logged with a predetermined regular interval with regard to two occurring consecutive packets.

Continuing to step 230, the packet arrival statistics are updated by the control logic means 180. In accordance with above, the statistics may be updated for each received packet or at regular intervals. The time elapsed between two packet arrivals is of key interest and will be used in the forthcoming derivations. Let the time between the arrivals of the $k$:th and $k+1$:th incoming packets be $\tau_k \geq 0$. Assume that $\tau_k$ is a stochastic variable with some PDF $f_\tau(t)$, for all k. All times are here normalized, so that a packet carries speech information with duration 1, and the nominal packet inter-arrival time is also 1. Also define $p_\tau(m)$ as the probability of a packet inter-arrival time in the interval $m \leq \tau < m+1$, i.e.,

$$p_\tau(m) = \Pr\{m \leq \tau < m+1\} = \int_m^{m+1} f_\tau(t)\,dt$$

The function $p_\tau(m)$ represents the probability mass function (PMF) for the inter-arrival time rounded down. This PMF is continuously updated by the control logic means 180 in order to reflect packet inter-arrival times. An estimate of this PMF $p_\tau(m)$ for $m=0, 1, ..., M$ can be derived in accordance with the following.

Let $m$ denote the integer number of packet times that has elapsed since the last packet was received, wherein a packet time is the duration of audio produced from data carried by a packet. (For example, if the packet time is 20 ms and the last packet arrived 50 ms ago, then m=2, since two entire packet times have elapsed.)

The inter-arrival time statistics are stored in a vector p=[$p(0)$ $p(1)$ ... $p(M)$] with $M+1$ elements. The first element $p(0)$ represents the probability of observing a packet inter-arrival time larger than or equal to 0 but smaller than 1, $p(1)$ represents inter-arrival times between 1 and 2, and so on. The last element, $p(M)$, represents the probability of observing an inter-arrival time larger than or equal to M. All times are given as packet times. Upon observing a given inter-arrival time, the corresponding element in the vector p is increased towards 1, while the remaining elements are decreased. The increasing and decreasing is governed by a forgetting factor $\mu$, which is a design variable. The following steps constitute the statistics update method:

1. When receiving a new packet, count the number of packet times elapsed since the last packet was received. Denote this number m.
2. Apply upper limit Mon the measured time: if $m>M$, let $m=M$.
3. Increase the statistics vector element corresponding to the currently measured time: let the $m$:th element $p(m)$ be updated to $\mu p(m)+(1-\mu)$.
4. Decrease the remaining statistics vector elements: multiply each element (except $p(m)$) with the factor $\mu$.

The vector p will be a constantly evolving estimate of the packet inter-arrival time probability density function (PDF), and should by construction sum up to 1. The PDF estimate indicates what the network conditions are.

The purpose of estimating the inter-arrival time statistics is to calculate a buffer level suitable for the current network conditions. If the network conditions are fair, the probability of observing very long periods between arriving packets is small, and a low buffer level is appropriate. If, on the contrary, the same probability is high, the number of packets in the buffer should be kept higher in order to be prepared for long periods without incoming packets.

Determining a suitable buffer level is a trade-off between low internal delay at the receiver and robustness against network jitter, as these two requirements are contradictory. The internal delay is simply the buffer level $B$. A measure of the robustness against network jitter is the duration of a buffer underflow, i.e., the expected duration of an empty jitter buffer given buffer level $B$. In this context, $B$ is any arbitrary buffer level.

In step 240 an expected duration of an empty jitter buffer is defined by the control logic means 180. Assuming an arbitrary buffer level $B$, i.e., $B$ packets are in the jitter buffer, an underflow occurs if we have decoded and used all $B$ packets before the next packet arrives. In other words, if the inter-arrival time between the last received packet and the next packet is larger than $B \cdot T_{frame}$ seconds, where $T_{frame}$ is the length of the audio data carried in each packet, a buffer underflow occurs. The probability of an underflow, given that we have $B$ packets in the buffer, can be expressed in the PDF $f_\tau(t)$ as

$$\Pr\left\{\text{underflow }|\dot{B}\right\} = \int\limits_{B}^{\infty} f_\tau(t)\,dt$$

Similarly, the expected length of an underflow, i.e., roughly the length of the concealment data that must be produced, can be written as

$$\mathrm{E}\left[\text{length}\left(\text{underflow}\right)|B\right] = \int\limits_{B}^{\infty} (t - B) f_\tau(t)\,dt$$

Thus, the above equation defines the expected duration of an empty jitter buffer given a buffer level $B$.

As discussed above, determining a suitable buffer level is a trade-off between low internal delay at the receiver and robustness against network jitter in terms of a low expected duration of an empty jitter buffer. The combination of these two quantities forms the basis of an optimization problem that needs to be solved.

Therefore, in step 250, the control logic means 180 is configured to define and make use of a cost function in which these two quantities are weighted and combined. Typically, the cost function corresponds to a function, e.g., a sum, of the expected duration of an empty jitter buffer and a jitter buffer delay at buffer level $B$.

$$\eta(B) = C \cdot B + \mathrm{E}\left[\text{length}\left(\text{underflow}\right)|B\right] = C \cdot B + \int\limits_{B}^{\infty} (t - B) f_\tau(t)\,dt$$

The parameter C is a weighting factor which sets the relative importance of the two quantities. A large $C$ will punish a large internal buffer delay harder while a small $C$ will punish severe buffer underflows. The goal is to find the B that minimizes the cost function.

In step 260 the control logic means 180 minimizes the cost function with regard to buffer level B to thereby derive a target buffer level. Analytically this is performed in accordance with the following.

Deriving the target buffer level starts with differentiating $\eta(B)$ with respect to $B$ and equating the result to zero:

$$\frac{d}{dB}\eta(B) = C - \int\limits_{B}^{\infty} f_\tau(t)\,dt \equiv 0 \quad \Leftrightarrow \quad \int\limits_{B^*}^{\infty} f_\tau(t)\,dt = C.$$

That is, the value $B^*$ for which the integral of $f_\tau(t)$ from $B^*$ to infinity is equal to C is an extreme value of the cost function $\eta(B)$. The optimum is unique and well defined for all $0<C<1$, since $f_\tau(t)\geq 0$ and integrates to 1. Furthermore, differentiating $\eta(B)$ a second time yields a positive result, indicating that $\eta(B)$ is a convex function with one unique minimum.

The above result is given using the continuous function $f_\tau(t)$, while the available statistics in the implemented method is the discretized version $p_\tau(m)$. Hence, we must re-write the above optimality criterion in terms of the discretized statistics. First, we use the fact that

$$\int\limits_{0}^{\infty} f_\tau(t)\,dt = 1 \quad \Leftrightarrow \quad \int\limits_{B^*}^{\infty} f_\tau(t)\,dt = 1 - \int\limits_{0}^{B^*} f_\tau(t)\,dt$$

to write the optimality criterion as

$$1 - \int_{0}^{B^*} f_\tau(t)\,dt = C \,.$$

Now, since

$$p_\tau(m) = \mathrm{Pr}\{m \le \tau < m+1\} = \int_{m}^{m+1} f_\tau(t)\,dt \,,$$

the integral of $f_\tau(t)$ from 0 to $B^*$ can be expressed as

$$\int_{0}^{B^*} f_\tau(t)\,dt = \sum_{m=0}^{B^*-1} p_\tau(m),$$

but only when $B^*$ is an integer value. For non-integer values it holds that

$$\sum_{m=0}^{B^*-1} p_\tau(m) < \int_{0}^{B^*} f_\tau(t)\,dt < \sum_{m=0}^{B^*} p_\tau(m)$$

Thus, we cannot expect to find a $B^*$ for which 1 minus the sum is exactly C, as stipulated in the optimality criterion. Therefore, we define that the target buffer level is the smallest $B$ such that 1 minus the sum of $p_\tau(0)$, $p_\tau(1)$,..., $p_\tau(B)$ is smaller than or equal to $C$. This can be expressed as

$$B^* = \arg\min_{B}\left\{ B : 1 - \sum_{m=0}^{B} p_\tau(m) \le C \right\}.$$

(The formula could be equivalently formulated as a sum going backwards from the last element $p_\tau(M)$ towards the first element.)

Thus, step 260 in Fig. 2 concerns solving the above last expression to derive $B^*$. One way to implement step 260 is by the following calculation steps 5 - 8 (being subsequent to steps 1 - 4 of the statistics update method described above). In the below steps, C denotes the weighting factor.

5. Set a variable $S$ to 1.
6. Initialize a variable $B$ to $0$.
7. Subtract the statistics vector element $p(B)$ from $S$:

$$S := S\text{-}p(B)$$

8. While $S>C$ and $B<M$, increase $B$ with one and return to step 7.

Otherwise, use the value of $B$ as the target buffer level $B^*$.
According to an advantageous embodiment, the control logic means in step 270 compare the target buffer level with a current buffer level of the jitter buffer 150. According to one embodiment, the target buffer level $B^*$ is compared with a filtered version $B_f$ of the current buffer level, rather than with the instantaneous buffer level $B$. This is done because the instantaneous buffer level has an intrinsic variation that it is preferred not to respond to immediately.

The current buffer level is influenced by three processes:

- Packets coming in to the buffer from the network;
- Packets taken out of the buffer for decoding and playout;
- Buffer level modifications because of active decisions to reduce or increase the buffer level (these decisions are further discussed below).

The first two processes are considered to be of a stochastic nature, and should preferably be smoothed. The last process consists of deliberate and known buffer level modifications, and these should preferably influence the filtered buffer level immediately, without filtering.

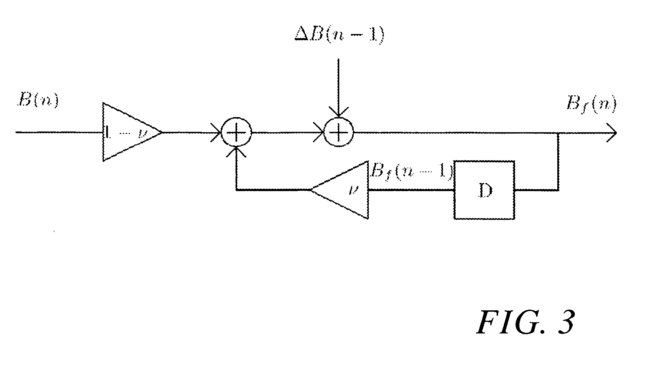

The smoothing is performed by a buffer level low pass filter implemented by the control logic means 180, e.g. a filter as depicted in the Fig. 3. According to an embodiment of the filter, use is made of an exponential window in the form of an IIR (infinite impulse response) filter with exponentially decaying impulse response. In the Fig. 3, $B(n)$ is the current buffer level at time $n$ as reported by the jitter buffer 150, $B_f(n)$ is the filtered buffer level at time $n$, D is a one-step delay block, $\Delta B(n\text{-}1)$ is the active buffer level modifications done since the last filter update (positive for level increase and negative for level decrease). The factor $v$ is the filter coefficient, determining the response of the filter.

The filter coefficient $v$ is made adaptive in this exemplary implementation, motivated by the following argument. In a network scenario with large variance in packet inter-arrival times, the natural fluctuations in the instantaneous buffer level are larger, and a larger $v$ is desired in order to increase noise resistance. When the network conditions are better, a smaller $v$ can be applied to improve response time. The optimal buffer level $B^*$ is an indicator of the current network conditions: a larger $B^*$ implies larger variance in inter-arrival times, and should result in a larger filter coefficient $v$, and vice versa.

The filter process is performed by the control logic means 180 each time audio is played out and is summarized in the following steps 9 - 14 (being subsequent to the calculation steps 5 - 8 described above):

9. Calculate filter coefficient $v$ based on optimal buffer level $B^*$:

$$v = \begin{cases} \frac{250}{256}, & B^* = 0; \\ \frac{251}{256}, & B^* = 1; \\ \frac{252}{256}, & 2 \leq B^* \leq 3; \\ \frac{253}{256}, & 4 \leq B^* \leq 7; \\ \frac{254}{256}, & B^* \geq 8. \end{cases}$$

10. Measure the current number of packets $B$ in the jitter buffer (possibly a fraction of packets). Multiply this level with $1\text{-}v$.

11. Add to this product the filtered buffer level from the previous filter update multiplied with the filter coefficient $v$.

12. Add the amount of data (possibly a fraction of packets) inserted into the jitter buffer through active jitter buffer expansion to the above sum.

13. Subtract the amount of data (possibly a fraction of packets) removed from the jitter buffer through active jitter buffer reduction from the above sum.

14. The result is the new filtered buffer level.

Thus, after calculating the target buffer level, and possibly the filtered buffer level, the control logic means 180 compare the target buffer level and the current, or current filtered, buffer level to make a decision regarding any signaling that the current buffer level should be modified in the direction of the target buffer level. The comparison and resulting signaling is quite straightforward and is described with the subsequent steps 15 and 16:

15. If the (filtered) current buffer level is sufficiently larger than the target buffer level, then signal that data in the buffer should be reduced. Preferably, signaling that data in the buffer should be reduced is made if $B_f > a \cdot B^*$, where a is a parameter larger than or equal to 1.

16. If the (filtered) current buffer level is sufficiently smaller than the target buffer level, then signal that data in the buffer should be increased. Preferably, signaling that data in the buffer should be increased is made if $B_f < b \cdot B^*$,

where *b* is a parameter smaller than or equal to 1.

The parameters a and b define a tolerance window around the target buffer level B*. If the current level is within this window, no buffer level adjustment, i.e. no signaling, is necessary. The signaling that data in the buffer should be reduced or increased is made from the control logic means 180 to the decoder 160 or to the audio buffer 170. In response to the signaling, the decoder 160 or the audio buffer 170 will modify the length of decoded signal sample information. This will result in a change of packet demand by the decoder 160 from the jitter buffer 150, i.e. it will increase or reduce the frequency with which packets are read from the jitter buffer 150, thereby reducing or increasing the buffer level. The actual implementation of how to reduce or increase the buffer level is, however, beyond the scope of this invention. For a detailed description of such an implementation, reference is made to EP 1 243 090.

**Claims**

1.  A method of determining a target buffer level in a jitter-buffer (150) in response to current network conditions of a packet data network (130), the jitter-buffer receiving data packets with digitized signal samples from the packet data network, the method performing, at regular intervals, the steps of:

    logging (220), for a most recent received packet, a packet inter-arrival time defined as a time elapsed since a previous packet was received;
    **characterized by**
    updating (230), in response to the logging step, a probability mass function reflecting packet inter-arrival times;
    using the updated probability mass function to define (240) an expected duration of an empty jitter buffer for an arbitrary buffer level;
    providing (250) a cost function as a function of the expected duration of an empty buffer at the arbitrary buffer level and a jitter buffer delay at the same arbitrary buffer level, wherein a weighting factor is applied to the jitter buffer delay; and
    determining (260) the target buffer level as the jitter buffer level which minimizes the cost function.

2.  The method as claimed in claim 1, wherein the cost function is defined as a sum of the weighted jitter buffer delay and the expected duration of an empty jitter buffer.

3.  The method as claimed in claim 1 or 2, including:

    comparing (270) a current buffer level with the target buffer level; and
    if the comparing step results in a difference between the two levels, signaling (280, 290) that a length of decoded signal sample information should be modified, wherein the signaling indirectly controls the current buffer level in the direction of the target buffer level by influencing data packet demand made to the buffer.

4.  The method as claimed in any one of claims 1-3, wherein the signaling is performed provided that the difference between the current buffer level and the target buffer level is larger that a predetermined tolerance window.

5.  The method as claimed in any one of claims 1-4, wherein the steps of the method are performed for each received packet.

6.  The method as claimed in any one of claims 3-5, including low-pass filtering the current buffer level when performing said comparing step.

7.  The method as claimed in claim 6, wherein the low-pass filtering includes filtering with an infinite impulse response filter having an exponentially decaying impulse response.

8.  The method as claimed in any one of claims 1-7, wherein the jitter buffer delay and the expected duration of an empty buffer is given equal weight in said cost function.

9.  The method as claimed in any one of claims 1-7, wherein the jitter buffer delay is given more weight than the expected duration of an empty buffer in said cost function.

10. The method of claim 8 or 9, wherein the data packets with digitized signal samples include samples of a voice signal.

11. The method as claimed in any one of claims 1-7, wherein the expected duration of an empty buffer is given more weight than the jitter buffer delay in said cost function.

12. The method of claim 8 or 11, wherein the data packets with digitized signal samples include samples of a radio signal.

13. A computer readable medium having computer executable instructions for carrying out each of the steps of the method as claimed in any one of claims 1-12 when run on a processing unit.

14. A receiver 135 for receiving data packets with digitized signal samples from a packet data network (130), the receiver including:

   a jitter-buffer (150) for storing the received data packets, wherein a buffer level indicates the amount of stored data packets; and
   control logic means (180) for, at regular intervals, determining a target buffer level in the jitter-buffer in response to current network conditions of the packet data network, **characterized in that** the control logic means is further adapted for:

   logging (220), for a most recent received packet, a packet inter-arrival time defined as a time elapsed since a previous packet was received;
   updating (230), in response to the logging step, a probability mass function reflecting packet inter-arrival times;
   using the updated probability mass function to define (240) an expected duration of an empty jitter buffer for an arbitrary buffer level;
   providing (250) a cost function as a function of the expected duration of an empty buffer at the arbitrary buffer level and a jitter buffer delay at the same arbitrary buffer level, wherein a weighting factor is applied to the jitter buffer delay; and
   determining (280) the target buffer level as the jitter buffer level which minimizes the cost function.

15. The receiver as claimed in claim 14, wherein the cost function is defined as a sum of the weighted jitter buffer delay and the expected duration of an empty jitter buffer.

16. The receiver as claimed in claim 14 or 15, the control logic means being further adapted for:

   comparing (270) the current buffer level with the target buffer level; and
   if said comparing results in a difference between the two levels, signaling (280, 290) that a length of decoded signal sample information should be modified, wherein the signaling indirectly controls the current buffer level in the direction of the target buffer level by influencing data packet demand made to the buffer.

17. The receiver as claimed in any one of claims 14-16, wherein the signaling is performed only if that the difference between the current buffer level and the target buffer level is larger that a predetermined tolerance window.

18. The receiver as claimed in any one of claims 14-17, wherein the control logic means is adapted to perform its operation for each received packet.

19. The receiver as claimed in any one of claims 14-18, the control logic means being further adapted for low-pass filtering the current buffer level when performing the comparing operation.

20. The receiver as claimed in claim 19, wherein the low-pass filtering includes filtering with an infinite impulse response filter having an exponentially decaying impulse response.

21. The receiver as claimed in any one of claims 14-20, wherein the jitter buffer delay and the expected duration of an empty buffer is given equal weight in said cost function.

22. The receiver as claimed in any one of claims 14-20, wherein the jitter buffer delay is given more weight than the expected duration of an empty buffer in said cost function.

23. The receiver of claim 21 or 22, wherein the data packets with digitized signal samples include samples of a voice signal.

**24.** The receiver as claimed in any one of claims 14-20, wherein the expected duration of an empty buffer is given more weight than the jitter buffer delay in said cost function.

**25.** The receiver of claim 21 or 24, wherein the data packets with digitized signal samples include samples of a radio signal.

**Patentansprüche**

**1.** Verfahren zum Bestimmen eines Zielpufferpegels in einem Jitterpuffer (150) in Reaktion auf momentane Netzwerkbedingungen eines Paketdatennetzwerkes (130), wobei der Jitterpuffer Datenpakete mit digitalisierten Signalabtastungen aus dem Paketdatennetzwerk empfängt, wobei das Verfahren in regelmäßigen Intervallen folgende Schritte ausführt:

Protokollieren (220), für ein zuletzt empfangenes Paket, einer Paketankunftszwischenzeit, die als eine Zeit definiert ist, die seit dem Empfang eines vorherigen Paketes verstrichen ist;
**gekennzeichnet durch**:

Aktualisieren (230), in Reaktion auf den Protokollierungsschritt, einer Wahrscheinlichkeitsmassenfunktion, die Paketankunftszwischenzeiten widerspiegelt;
Verwenden der aktualisierten Wahrscheinlichkeitsmassenfunktion zum Definieren (240) einer erwarteten Dauer eines leeren Jitterpuffers für einen beliebigen Pufferpegel;
Bereitstellen (250) einer Kostenfunktion als eine Funktion der erwarteten Dauer eines leeren Puffers auf dem beliebigen Pufferpegel und einer Jitterpufferverzögerung auf demselben beliebigen Pufferpegel, wobei ein Gewichtungsfaktor auf die Jitterpufferverzögerung angewendet wird; und
Bestimmen (260) des Zielpufferpegels als den Jitterpufferpegel, der die Kostenfunktion minimiert.

**2.** Verfahren nach Anspruch 1, wobei die Kostenfunktion als eine Summe der gewichteten Jitterpufferverzögerung und der erwarteten Dauer eines leeren Jitterpuffers definiert ist.

**3.** Verfahren nach Anspruch 1 oder 2, das Folgendes enthält:

Vergleichen (270) eines aktuellen Pufferpegels mit dem Zielpufferpegel; und
wenn der Schritt des Vergleichens zu einer Differenz zwischen den zwei Pegeln führt, Signalisieren (280, 290), dass ein Abschnitt von decodierten Signalabtastungsinformationen modifiziert werden soll, wobei das Signalisieren indirekt den aktuellen Pufferpegel in der Richtung des Zielpufferpegels steuert, indem es die an den Puffer gerichtete Datenpaketnachfrage beeinflusst.

**4.** Verfahren nach einem der Ansprüche 1-3, wobei das Signalisieren unter dem Vorbehalt ausgeführt wird, dass die Differenz zwischen dem aktuellen Pufferpegel und dem Zielpufferpegel größer ist als ein zuvor festgelegtes Toleranzfenster.

**5.** Verfahren nach einem der Ansprüche 1-4, wobei die Schritte des Verfahrens für jedes empfangene Paket ausgeführt werden.

**6.** Verfahren nach einem der Ansprüche 3-5, das eine Tiefpassfilterung des aktuellen Pufferpegels enthält, wenn der Schritt des Vergleichens ausgeführt wird.

**7.** Verfahren nach Anspruch 6, wobei die Tiefpassfilterung das Filtern mit einem rekursiven Filter enthält, das eine exponentiell abklingende Impulsantwort aufweist.

**8.** Verfahren nach einem der Ansprüche 1-7, wobei die Jitterpufferverzögerung und die erwartete Dauer eines leeren Puffers ein gleiches Gewicht in der Kostenfunktion erhalten.

**9.** Verfahren nach einem der Ansprüche 1-7, wobei die Jitterpufferverzögerung in der Kostenfunktion mehr Gewicht erhält als die erwartete Dauer eines leeren Puffers.

**10.** Verfahren nach Anspruch 8 oder 9, wobei die Datenpakete mit digitalisierten Signalabtastungen Abtastungen eines Sprachsignals enthalten.

**11.** Verfahren nach einem der Ansprüche 1-7, wobei die erwartete Dauer eines leeren Puffers in der Kostenfunktion mehr Gewicht erhält als die Jitterpufferverzögerung.

**12.** Verfahren nach Anspruch 8 oder 11, wobei die Datenpakete mit digitalisierten Signalabtastungen Abtastungen eines Funksignals enthalten.

**13.** Computerlesbares Speichermedium, das durch einen Computer ausführbare Anweisungen enthält, jeden der Schritte des Verfahrens nach einem der Ansprüche 1-12 durchzuführen, wenn sie in einer Verarbeitungseinheit ausgeführt werden.

**14.** Empfänger (135) zum Empfangen von Datenpaketen mit digitalisierten Signalabtastungen aus einem Paketdatennetzwerk (130), wobei der Empfänger Folgendes enthält:

einen Jitterpuffer (150) zum Speichern der empfangenen Datenpakete, wobei ein Pufferpegel die Menge der gespeicherten Datenpakete anzeigt; und
ein Steuerlogikmittel (180) zum Bestimmen, in regelmäßigen Intervallen, eines Zielpufferpegels in dem Jitterpuffer in Reaktion auf momentane Netzwerkbedingungen des Paketdatennetzwerks, **dadurch gekennzeichnet, dass** das Steuerlogikmittel des Weiteren für Folgendes ausgelegt ist:

Protokollieren (220), für ein zuletzt empfangenes Paket, einer Paketankunftszwischenzeit, die als eine Zeit definiert ist, die seit dem Empfang eines vorherigen Paketes verstrichen ist;
Aktualisieren (230), in Reaktion auf den Protokollierungsschritt, einer Wahrscheinlichkeitsmassenfunktion, die Paketankunftszwischenzeiten widerspiegelt;
Verwenden der aktualisierten Wahrscheinlichkeitsmassenfunktion zum Definieren (240) einer erwarteten Dauer eines leeren Jitterpuffers für einen beliebigen Pufferpegel,
Bereitstellen (250) einer Kostenfunktion als eine Funktion der erwarteten Dauer eines leeren Puffers auf dem beliebigen Pufferpegel und einer Jitterpufferverzögerung auf demselben beliebigen Pufferpegel, wobei ein Gewichtungsfaktor auf die Jitterpufferverzögerung angewendet wird; und
Bestimmen (260) des Zielpufferpegels als den Jitterpufferpegel, der die Kostenfunktion minimiert.

**15.** Empfänger nach Anspruch 14, wobei die Kostenfunktion als eine Summe der gewichteten Jitterpufferverzögerung und der erwarteten Dauer eines leeren Jitterpuffers definiert ist.

**16.** Empfänger nach Anspruch 14 oder 15, wobei das Steuerlogikmittel des Weiteren für Folgendes ausgelegt ist:

Vergleichen (270) des momentanen Pufferpegels mit dem Zielpufferpegel; und
wenn das Vergleichen zu einer Differenz zwischen den zwei Pegeln führt,
Signalisieren (280, 290), dass ein Abschnitt von decodierten Signalabtastungsinformationen modifiziert werden soll, wobei das Signalisieren indirekt den aktuellen Pufferpegel in der Richtung des Zielpufferpegels steuert, indem es die an den Puffer gerichtete Datenpaketnachfrage beeinflusst.

**17.** Empfänger nach einem der Ansprüche 14-16, wobei das Signalisieren nur ausgeführt wird, wenn die Differenz zwischen dem aktuellen Pufferpegel und dem Zielpufferpegel größer ist als ein zuvor festgelegtes Toleranzfenster.

**18.** Empfänger nach einem der Ansprüche 14-17, wobei das Steuerlogikmittel dafür ausgelegt ist, seine Funktion für jedes empfangene Paket auszuführen.

**19.** Empfänger nach einem der Ansprüche 14-18, wobei das Steuerlogikmittel des Weiteren zum Tiefpassfiltern des momentanen Pufferpegels ausgelegt ist, wenn die Vergleichsoperation ausgeführt wird.

**20.** Empfänger nach Anspruch 19, wobei die Tiefpassfilterung das Filtern mit einem rekursiven Filter enthält, das eine exponentiell abklingende Impulsantwort aufweist.

**21.** Empfänger nach einem der Ansprüche 14-20, wobei die Jitterpufferverzögerung und die erwartete Dauer eines leeren Puffers in der Kostenfunktion ein gleiches Gewicht erhalten.

**22.** Empfänger nach einem der Ansprüche 14-20, wobei die Jitterpufferverzögerung in der Kostenfunktion mehr Gewicht erhält als die erwartete Dauer eines leeren Puffers.

**23.** Empfänger nach Anspruch 21 oder 22, wobei die Datenpakete mit digitalisierten Signalabtastungen Abtastungen eines Sprachsignals enthalten.

**24.** Empfänger nach einem der Ansprüche 14-20, wobei die erwartete Dauer eines leeren Puffers in der Kostenfunktion mehr Gewicht erhält als die Jitterpufferverzögerung.

**25.** Empfänger nach Anspruch 21 oder 24, wobei die Datenpakete mit digitalisierten Signalabtastungen Abtastungen eines Funksignals enthalten.

## Revendications

**1.** Procédé pour déterminer un niveau de tampon de gigue cible dans un tampon de gigue (150) en réponse à des conditions der réseau actuelles d'un réseau de paquets de données (130), le tampon de gigue recevant des paquets de données avec des échantillons de signaux numérisés en provenance du réseau de paquets de données, le procédé mettant en oeuvre, à des intervalles réguliers, les étapes consistant à :

journaliser (220), pour un paquet reçu le plus récent, le temps entre arrivées de paquet comme un temps écoulé depuis qu'un paquet précédent a été reçu ;
**caractérisé par** les étapes consistant à :

mettre à jour (230), en réponse à l'étape de journalisation, une fonction de masse de probabilité reflétant les temps entre arrivées de paquet ;
utiliser la fonction de masse de probabilité mise à jour pour définir (240) une durée escomptée d'un tampon de gigue vide pour un niveau de tampon arbitraire ;
fournir (250) une fonction de coût comme une fonction de la durée escomptée d'un tampon vide au niveau de tampon arbitraire et un retard de tampon de gigue au même niveau de tampon arbitraire, dans lequel un facteur de pondération est appliqué au retard de tampon de gigue ; et
déterminer (260) le niveau de tampon cible comme le niveau de tampon de gigue qui minimise la fonction de coût.

**2.** Procédé selon la revendication 1, dans lequel la fonction de coût est définie comme une somme du retard de tampon de gigue pondéré et la durée escomptée d'un tampon de gigue vide.

**3.** Procédé selon la revendication 1 ou 2, incluant de :

comparer (270) un niveau de tampon actuel avec le niveau de tampon cible ; et
si l'étape de comparaison donne une différence entre les deux niveaux, signaler (280, 290) qu'une longueur d'une information d'échantillon de signal décodé doit être modifiée, dans lequel la signalisation commande indirectement le niveau de tampon actuel dans la direction du niveau de tampon cible en influençant une demande de paquet de données faite au tampon.

**4.** Procédé selon une quelconque des revendications 1 à 3, dans lequel la signalisation est effectuée à condition que la différence entre le niveau de tampon actuel et le niveau de tampon cible doit plus grande qu'une fenêtre de tolérance prédéterminée.

**5.** Procédé selon une quelconque des revendications 1 à 4, dans lequel els étapes du procédé sont exécutées pour chaque paquet reçu.

**6.** Procédé selon une quelconque des revendications 3 à 5, incluant un filtrage passe-bas du niveau de tampon actuel lors de l'exécution de ladite étape de comparaison.

**7.** Procédé selon la revendication 6, dans lequel le filtrage passe-bas inclut un filtrage avec un filtre à réponse impulsionnelle infinie ayant une réponse impulsionnelle exponentiellement décroissante.

**8.** Procédé selon une quelconque des revendications 1 à 7, dans lequel le retard de tampon de gigue et la durée escomptée d'un tampon vide se voient conférer un poids égal dans ladite fonction de coût.

9. Procédé selon une quelconque des revendications 1 à 7, dans lequel le retard de tampon de gigue se voit conférer plus de poids que la durée escomptée d'un tampon vide dans ladite fonction de coût.

10. Procédé selon la revendication 8 ou 9, dans lequel els paquets de données avec des échantillons de signaux numérisés incluent des échantillons d'un signal vocal.

11. Procédé selon une quelconque des revendications 1 à 7, dans lequel la durée escomptée d'un tampon vide se voit conférer plus de poids que le retard de tampon de gigue dans ladite fonction de coût.

12. Procédé selon la revendication 8 ou 11, dans lequel les paquets de données avec des échantillons de signaux numérisés incluent des échantillons d'un signal radio.

13. Support lisible par un ordinateur comportant des instructions exécutables par un ordinateur pour mettre en oeuvre les étapes du procédé selon une quelconque des revendications 1 à 12 quand il tourne sur une unité de traitement.

14. Récepteur (135) pour recevoir des paquets de données avec des échantillons de signaux numérisés en provenance d'un réseau de paquets de données (130), le récepteur incluant :

   un tampon de gigue (150) pour mémoriser les paquets de données reçus, dans lequel un niveau de tampon indique la quantité de paquets de données mémorisés ; et
   un moyen logique de commande (180) pour, à des intervalles réguliers, déterminer un niveau de tampon cible dans le tampon de gigue en réponse à des conditions de réseau actuelles du réseau de paquets de données, **caractérisé en ce que** le moyen de commande logique est en outre adapté afin de :

      journaliser (220), pour un paquet reçu le plus récent, un temps entre arrivées de paquet comme un temps écoulé depuis qu'un précédent paquet a été reçu ;
      mettre à jour (230), en réponse à l'étape de journalisation, une fonction de masse de probabilité reflétant des temps entre arrivées de paquet ;
      utiliser la fonction de masse de probabilité mise à jour pour définir (240) une durée escomptée d'un tampon de gigue vide pour un niveau de tampon arbitraire ;
      fournir (250) une fonction de coût comme une fonction de la durée escomptée d'un tampon vide au niveau de tampon arbitraire et un retard de tampon de gigue au même niveau de tampon arbitraire, dans lequel un facteur de pondération est appliqué au retard de tampon de gigue ; et
      déterminer (260) le niveau de tampon cible comme le niveau de tampon de gigue qui minimise la fonction de coût.

15. Récepteur selon la revendication 14, dans lequel la fonction de coût est définie comme une somme du retard de tampon de gigue pondéré et de la durée escomptée d'un tampon de gigue vide.

16. Récepteur selon la revendication 14 ou 15, le moyen de commande logique étant en outre adapté afin de :

   comparer (270) un niveau de tampon actuel avec le niveau de tampon cible ; et
   si l'étape de comparaison donne une différence entre les deux niveaux, signaler (280, 290) qu'une longueur d'une information d'échantillon de signal décodé doit être modifiée, dans lequel la signalisation commande indirectement le niveau de tampon actuel dans la direction du niveau de tampon cible en influençant une demande de paquet de données faite au tampon.

17. Récepteur selon une quelconque des revendications 14 à 16, dans lequel la signalisation est effectuée seulement si la différence entre le niveau de tampon actuel et le niveau de tampon cible est plus grande qu'une fenêtre de tolérance prédéterminée.

18. Récepteur selon une quelconque des revendications 14 à 17, dans lequel le moyen logique de commande est adapté afin de fonctionner pour chaque paquet reçu.

19. Récepteur selon une quelconque des revendications 14 à 18, le moyen logique de commande étant en outre adapté pour un filtrage passe-bas du niveau de tampon actuel lorsqu'il exécute l'opération de comparaison.

20. Récepteur selon la revendication 19, dans lequel le filtrage passe-bas inclut le filtrage avec un filtre à réponse impulsionnelle infinie ayant une réponse impulsionnelle exponentiellement décroissante.

21. Récepteur selon une quelconque des revendications 14 à 20, dans lequel le retard de tampon de gigue et la durée escomptée d'un tampon vide se voient conférer un poids égal dans ladite fonction de coût.

22. Récepteur selon une quelconque des revendications 14 à 20, dans lequel le retard de tampon de gigue se voit conférer plus de poids que la durée escomptée d'un tampon vide dans ladite fonction de coût.

23. Récepteur selon la revendication 21 ou 22, dans lequel els paquets de données avec des échantillons de signaux numérisés incluent des échantillons d'un signal vocal.

24. Récepteur selon une quelconque des revendications 14 à 20, dans lequel la durée escomptée d'un tampon vide se voit conférer plus de poids que le retard de tampon de gigue dans ladite fonction de coût.

25. Récepteur selon la revendication 21 ou 24, dans lequel els paquets de données avec des échantillons de signaux numérisés incluent des échantillons d'un signal radio.

FIG. 1

EP 2 009 820 B1

Receive packet and store in jitter buffer — 200

Log packet's time of arrival — 210

Log packet inter-arrival time — 220

Update probability mass function reflecting packet inter-arrival times — 230

Define an expected duration of an empty jitter buffer — 240

Define a cost function weighting the expected duration of an empty buffer and a buffer delay — 250

Minimize the cost function to determined a target buffer level — 260

Compare target buffer level with current buffer level — 270

If target buffer level is below current buffer level, signal to decoder to reduce current buffer level — 280

If target buffer level is above current buffer level, signal to decoder to increase current buffer level — 290

*FIG. 2*

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6072809 A
- US 6259677 B
- US 7110422 B
- WO 0042749 A
- EP 1243090 A